(19) Europäisches Patentamt / European Patent Office / Office européen des brevets

(11) **EP 4 567 012 A2**

(12) **DEMANDE DE BREVET EUROPEEN**

(43) Date de publication:
**11.06.2025 Bulletin 2025/24**

(21) Numéro de dépôt: **25153748.6**

(22) Date de dépôt: **23.09.2021**

(51) Classification Internationale des Brevets (IPC):
***C03C 13/06*** *(2006.01)*

(52) Classification Coopérative des Brevets (CPC):
**C03B 1/00; C03B 3/005; C03C 1/002; C03C 1/026; C03C 13/06;** Y02P 40/50; Y02P 40/57

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2020 FR 2009691**

(62) Numéro(s) de document de la (des) demande(s) initiale(s) en application de l'article 76 CBE:
**21798411.1 / 4 185 557**

(71) Demandeur: **Saint-Gobain Isover
92400 Courbevoie (FR)**

(72) Inventeurs:
• **DUPEUX, Guillaume
75014 Paris (FR)**

• **MARTIN, Alexandre
95680 MONTLIGNON (FR)**
• **BARBA ROSSA, Guillaume
60200 COMPIEGNE (FR)**

(74) Mandataire: **Saint-Gobain Recherche
41 Quai Lucien Lefranc
93300 Aubervilliers (FR)**

Remarques:
• Cette demande a été déposée le 24-01-2025 comme demande divisionnaire de la demande mentionnée sous le code INID 62.
• Revendications déposées après la date de dépôt de la demande (règle 68(4) CBE).

(54) **PREPARATION D'UNE COMPOSITION DE MATIERES PREMIERES**

(57) Procédé de préparation d'une composition de matières premières adaptée pour être enfournée dans la chambre de fusion d'une installation adaptée à l'obtention de calcin, de laine de verre et/ou de roche, de fils de verre textile, de verre plat et/ou de verre creux, ledit procédé étant caractérisé en ce qu'il comprend au moins une étape de broyage d'un mélange de laine minérale adapté pour entrer dans la composition de matières premières, de sorte que le mélange granulaire obtenu après broyage présente une masse volumique apparente supérieure ou égale à 30 kg/m3.

[Fig. 1]

**EP 4 567 012 A2**

**Description**

La présente invention concerne un procédé de préparation d'une composition de matières premières adaptée pour être enfournée dans un four verrier. L'invention concerne également la composition de matières premières ainsi obtenue, de même qu'un procédé de fusion de cette composition. Enfin, l'invention se rapporte à un procédé de fabrication de calcin, de laine de verre et/ou de roche, de fils de verre textile et/ou de verre plat, ou de verre creux (bouteilles, flacons, ...) ou faisant suite audit procédé de fusion.

Plus particulièrement, une composition de matières premières selon l'invention est obtenue à partir d'un mélange de laine minérale. Au sens de l'invention, un tel mélange de laine minérale comprend un ou plusieurs types de fibres minérales issus de la production desdites fibres (déchets usines), de chantiers (déchets de chantier de construction ou déchets issus de chantiers de déconstruction) et/ou de filières de recyclage permettant de récupérer de telles fibres dans des produits finaux, qu'ils soient ou non usagés. En effet, les différentes étapes de la production de laine minérale génèrent une certaine quantité de déchets entrant dans la composition dudit mélange de laine minérale. Ces déchets peuvent provenir par exemple de la découpe des produits (et/ou produits mis au rebut), et contiennent alors des quantités importantes de matières organiques telles que des résines appelées « liants » et destinées à assurer la cohésion mécanique des matelas fibreux. D'autres types de matières peuvent être associées aux fibres minérales, par exemple des films papier, à base d'aluminium ou bitumineux, des éléments de palettes en bois. De telles fibres minérales peuvent en particulier être constituées de verre et/ou de roche. On parle alors respectivement de laine de verre et de laine de roche. Ces fibres minérales sont en général associées à des liants organiques et à d'autres matières métalliques et/ou organiques.

Dans ce contexte, et tel que décrit dans le texte du brevet EP1771391B1, il est connu de « recycler » un tel mélange de laine minérale en le faisant fondre dans un four verrier, de manière à produire du calcin ou en d'autres termes, une matière minérale apte à être utilisée comme matière première vitrifiable dans un procédé ultérieur de fusion du verre. Parmi les nombreux avantages d'un tel recyclage des déchets de laine minérale, on compte notamment l'amélioration du rendement énergétique du four verrier, le mélange de laine minérale collecté et/ou le calcin qui résulte de sa fusion étant plus facile à fondre qu'un qu'une composition « classique » de matières premières comprenant entre autres de grandes quantités de silice.

En dépit de ces avantages, il a été constaté par les inventeurs que dans la pratique, un tel mélange de laine minérale occupe un volume conséquent au moment de son introduction dans le four, par exemple via une vis d'enfournement. A volume d'enfournement constant et en comparaison avec une composition de matières premières dite « traditionnelle », l'utilisation d'une composition de matières premières constituée d'un tel mélange de laine minérale tend à réduire significativement la masse de matières premières introduite dans le four par unité de temps. En d'autres termes, l'utilisation d'un tel mélange de laine minérale comme matière première réduit d'autant le débit massique d'enfournement, et donc le rendement du four ce qui, dans un contexte industriel, peut s'avérer être un inconvénient prohibitif.

Une solution naturelle à ce problème technique consiste à accroître la capacité des moyens d'enfournement des matières premières, par exemple en mettant en œuvre une enfourneuse à vis de plus grande dimension. Cette solution n'est cependant pas sans inconvénient, puisqu'elle implique une modification structurelle de l'enfourneuse et plus généralement, rend son dimensionnement dépendant de la nature de la composition enfournée.

L'invention revendiquée vise à fournir une solution technique aux inconvénients décrits ci-dessus. Plus particulièrement, dans au moins un mode de réalisation, la technique proposée se rapporte à un procédé de préparation d'une composition de matières premières adaptée pour être enfournée dans la chambre de fusion d'une installation adaptée à l'obtention de calcin, de laine de verre et/ou de roche, de fils de verre textile, de verre plat et/ou de verre creux, ledit procédé étant caractérisé en ce qu'il comprend au moins une étape de broyage d'un mélange de laine minérale adapté pour entrer dans la composition de matières premières, de sorte que le mélange granulaire obtenu après broyage présente une masse volumique apparente supérieure ou égale à 30 kg/m3.

Dans toute la description, l'expression « masse volumique apparente » synonyme de « masse volumique apparente sans tassement » (bulk density en langue anglaise), souvent appelée improprement densité apparente, désigne la masse du mélange broyé par unité de volume total, y inclus les espaces interstitiels séparant les granulats (grains) qui composent ce mélange. Au sens de l'invention, cette masse volumique apparente est mesurée selon un protocole opératoire détaillé dans la description, ou par tout protocole opératoire permettant l'obtention de résultats équivalents.

Le mélange de laine minérale faisant l'objet du broyage comprend un ou plusieurs types de fibres minérales issus de la production desdites fibres, de chantiers (construction ou déconstruction) et/ou de filières de recyclage permettant de récupérer de telles fibres dans des produits finaux, qu'ils soient ou non usagés. De telles fibres minérales peuvent en particulier être constituées de verre et/ou de roche. On parle alors respectivement de laine de verre et de laine de roche.

Un procédé de préparation selon l'invention permet d'accroître par broyage la masse volumique apparente du mélange de laine minérale, et ainsi d'obtenir un mélange granulaire pouvant être enfourné dans un four verrier dit « traditionnel » selon un débit massique d'enfournement satisfaisant. Tel que détaillé dans la description, l'utilisation d'un tel mélange granulaire permet notamment, dans des conditions standards d'enfournement en dessous du niveau du bain de verre, d'atteindre des valeurs de débit massique d'enfournement supérieurs ou égales à 5 tonnes par jour. Le choix d'une telle valeur minimale de masse volumique apparente prend notamment en compte l'écart constaté empiriquement entre la valeur théorique de débit massique d'enfournement et la valeur réelle d'un tel débit mesurée dans des conditions opératoires standards.

Selon un mode de réalisation particulier, le mélange granulaire obtenu présente une masse volumique apparente supérieure ou égale à 50 kg/m3, préférentiellement supérieure ou égale à 70 kg/m3, préférentiellement supérieure ou égale à 90 kg/m3, préférentiellement supérieure ou égale à 100 kg/m3.

L'augmentation de la masse volumique apparente du mélange granulaire permet d'accroître le débit massique d'enfournement, et donc la productivité du four.

Selon un mode de réalisation particulier, le mélange granulaire obtenu après broyage présente une masse volumique apparente inférieure ou égale à 500 kg/m3.

Tel que détaillé dans la description, la mise en œuvre d'une campagne d'essais de fusion sur four à brûleur immergé a révélé qu'au-dessus d'une certaine valeur de masse volumique apparente, une partie de la composition de matières premières introduite tend, du fait de sa forte volatilité, à être expulsée avec les fumées d'échappement, ce qui complexifie le travail de traitement des fumées, réduit la productivité du four, et représente par conséquent un inconvénient industriel majeur. A ce titre, et tel que détaillé dans la description, la mise en œuvre d'un mélange granulaire de masse volumique apparente inférieure ou égale à 500 kg/m3 permet de conserver un pourcentage d'envol du mélange granulaire acceptable, car inférieur à 3%.

Selon un mode de réalisation particulier, le mélange granulaire obtenu présente une masse volumique apparente inférieure ou égale à 400 kg/m3, préférentiellement inférieure ou égale à 300 kg/m3, préférentiellement inférieure ou égale à 220 kg/m3.

La limitation de la masse volumique apparente du mélange granulaire permet de réduire le pourcentage d'envol des matières premières, et donc de faciliter le traitement des fumées.

Selon un mode de réalisation particulier, la proportion massique dudit mélange granulaire sur la masse totale de ladite composition de matières premières est supérieure ou égale à 5%, préférentiellement supérieure ou égale à 20%, préférentiellement supérieure ou égale à 40%, préférentiellement supérieure ou égale à 60%, préférentiellement supérieure ou égale à 70%, préférentiellement supérieure ou égale à 80%, préférentiellement supérieure ou égale à 90%, préférentiellement supérieure ou égale à 95%, préférentiellement supérieure ou égale à 99%.

Selon un mode de réalisation particulier, le procédé de préparation comprend une étape d'ajout de calcin dans ledit mélange granulaire, la masse de calcin étant supérieure ou égale à 1% de la masse totale du mélange granulaire.

Il a été observé par les inventeurs que l'ajout de calcin dans le mélange granulaire, donc après broyage, tend à modifier son comportement rhéologique et ainsi à faciliter son transport, notamment lors de l'enfournement des matières premières. On parle ainsi de « fluidification » du mélange granulaire. La proportion minimale de 1% correspond au seuil minimal permettant de constater cet effet de fluidification du mélange granulaire.

L'introduction de calcin présente l'avantage supplémentaire de permettre son traitement en vue d'une utilisation ultérieure, par exemple par élimination dans un four à brûleur immergé de certains composés chimiques indésirables.

Selon un mode de réalisation particulier, la masse de calcin est inférieure ou égale à 20% de la masse totale du mélange granulaire.

Le calcin étant lui-même issu de la fusion de matières premières, pour un coût énergétique non négligeable, l'ajout et donc la fusion de calcin dans des proportions plus supérieures à 20% de la masse totale du mélange granulaire tendrait à réduire dans des proportions inacceptables le rendement énergétique de l'ensemble du procédé.

Selon un mode de réalisation particulier, ledit calcin ajouté présente une granularité comprise entre 1 et 5 mm.

Dans le présent texte, on entend par « granularité » la grosseur des granulats telle que déterminée par criblage sur tamis. Le choix d'une plage de granularité du calcin comprise entre 1 et 10 mm permet d'optimiser la fluidification du mélange granulaire par le calcin.

Selon un mode de réalisation particulier, le procédé de préparation comprend une étape préalable de détermination d'une valeur souhaitée de masse volumique apparente du mélange granulaire broyé, en fonction des caractéristiques dimensionnelles d'une enfourneuse à mettre en œuvre, et/ou d'une valeur souhaitée de débit massique d'enfournement.

La détermination préalable et la prise en compte subséquente d'une valeur souhaitée de masse volumique permet d'ajuster le procédé de préparation de la composition de matière premières, de sorte à obtenir un débit massique d'enfournement ciblé, en mettant en œuvre une enfourneuse dont les caractéristiques dimensionnelles sont connues.

Selon un mode de réalisation particulier, ledit mélange de laine minérale présente un taux d'humidité supérieur à 1% de la masse totale dudit mélange.

Tel que détaillé dans la description, une campagne d'essais sur broyeuse a permis de confirmer que l'augmentation du taux d'humidité du mélange de laine minérale permet d'accroître plus encore la masse volumique apparente du mélange granulaire obtenu après broyage, indépendamment de l'apport en masse lié à l'ajout d'eau. L'eau joue en effet un rôle de liant en créant des ponts capillaires entre les fibres, ce qui permet à ces dernières de mieux s'agglomérer.

Selon un mode de réalisation particulier, l'eau est apportée en amont du broyage et/ou pendant le broyage, par exemple par pulvérisation.

L'humidification du mélange de laine minérale pendant le broyage a pour avantage supplémentaire de limiter les émissions de poussière.

Selon un mode de réalisation particulier, ledit mélange de laine minérale présente un taux d'humidité supérieur à 2%, préférentiellement supérieur à 3%.

L'augmentation du taux d'humidité permet d'accroître plus encore la masse volumique apparente du mélange granulaire. Dans le cas d'un convoyage du mélange granulaire sur tapis, une limite supérieure de 25% correspond au seuil à partir duquel le mélange granulaire tend à rester collé au tapis de convoyage et ainsi à bloquer et/ou endommager ce dernier.

Selon un mode de réalisation particulier, le procédé de préparation met en œuvre au moins une broyeuse équipée d'une grille dont la taille de maille est inférieure à 20 mm.

Le choix d'une telle taille de maille permet l'obtention d'un mélange granulaire dont la masse volumique apparente est supérieure ou égale à 30 kg/m3.

Selon un mode de réalisation particulier, la taille de maille de ladite grille est inférieure à 20 mm, préférentiellement inférieure à 15 mm, préférentiellement inférieure à 10 mm.

Le choix d'une taille de maille de plus en plus petite permet de tendre vers un mélange granulaire dont la masse volumique est de plus en plus grande.

Selon un mode de réalisation particulier, le broyeur est adapté pour tourner à une vitesse supérieure à 150 tours par minute, préférentiellement supérieure à 175 tours par minute, préférentiellement supérieure à 200 tours par minute.

Le rendement du broyeur tend à augmenter avec la vitesse de rotation de son tambour.

Selon un mode de réalisation particulier, ledit mélange de laine minérale broyée comprend, hors encollage :

SiO2 : 30 à 75% massique,
CaO+MgO : 5 à 40% massique,
Al2O3 : 0 à 30% massique,
Na2O+K2O : 0 à 20% massique,
Oxyde de fer : 0 à 15% massique.

Selon un mode de réalisation particulier, ledit mélange de laine minérale broyée est constitué d'une laine de roche (également appelé « verre noir » par l'homme du métier) qui comprend, hors encollage :

SiO2 : 30 à 50% massique,
Al2O3 : 10 à 22% massique,
CaO+MgO : 20 à 40% massique,
Oxyde de fer : 3 à 15% massique,
Na2O+K2O : 1 à 10% massique.

Selon un mode de réalisation particulier, ledit mélange de laine minérale broyée est constitué d'une laine de verre qui comprend, hors encollage :

SiO2 : 50 à 75% massique,
Al2O3 : 0 à 8% massique,
CaO+MgO : 5 à 20% massique,
Oxyde de fer : 0 à 3% massique,
Na2O+K2O : 12 à 20% massique,
B2O3 : 2 à 10% massique.

Selon un mode de réalisation particulier, ledit mélange de laine minérale broyée comprend, hors encollage :

SiO2 : 39 à 44% massique,
Al2O3 : 16 à 27% massique,
CaO : 6 à 20% massique,
MgO : 1 à 5% massique,
Na2O : 0 à 15% massique,
K2O : 0 à 15% massique,

Na2O+K2O : 12 à 20% massique,
P2O5 : 0 à 3% massique,
Fe2O3 : 1,5 à 15% massique
B2O3 : 0 à 2% massique,
TiO2 : 0 à 2% massique.

L'invention se rapporte aussi à une composition de matières premières adaptée pour être enfournée dans la chambre de fusion d'une installation adaptée à l'obtention de calcin, de laine de verre et/ou de roche, de fils de verre textile, de verre plat et/ou de verre creux obtenue préférentiellement via un tel procédé de préparation, caractérisée en ce qu'elle comprend un mélange granulaire dont la masse volumique apparente est supérieure ou égale à 30 kg/m3.

Selon un mode de réalisation particulier, le mélange granulaire présente une masse volumique apparente supérieure ou égale à 50 kg/m3, préférentiellement supérieure ou égale à 70 kg/m3, préférentiellement supérieure ou égale à 90 kg/m3, préférentiellement supérieure ou égale à 110 kg/m3.

Selon un mode de réalisation particulier, le mélange granulaire présente une masse volumique apparente inférieure ou égale à 500 kg/m3, préférentiellement inférieure ou égale à 400 kg/m3, préférentiellement inférieure ou égale à 300 kg/m3, préférentiellement inférieure ou égale à 200 kg/m3, préférentiellement inférieure ou égale à 160 kg/m3, préférentiellement inférieure ou égale à 140 kg/m3.

Selon un mode de réalisation particulier, la composition de matières premières comprend au moins 30% massique de mélange granulaire, préférentiellement au moins 60% massique, encore préférentielle au moins 80% massique, encore préférentielle au moins 90% massique, encore préférentielle au moins 95% massique, encore préférentielle au moins 98% massique de mélange granulaire.

Selon un mode de réalisation particulier, la composition de matières premières comprend une masse de calcin d'au moins 1% de la masse totale du mélange granulaire.

Selon un mode de réalisation particulier, la masse de calcin est inférieure ou égale à 20% de la masse totale du mélange granulaire.

L'invention se rapporte également à un procédé de fusion d'une telle composition de matières premières, pour l'obtention de calcin, de laine de verre et/ou de roche, de fils de verre textile et/ou de verre plat/verre creux.

Selon un mode de réalisation particulier, ladite composition de matières premières est enfournée au moyen d'une vis d'enfournement, préférentiellement alimentée par un silo tampon contenant ladite composition de matières premières.

En comparaison avec un piston, qui fonctionne par cycles d'enfournement, une vis sans fin permet la mise en œuvre d'un enfournement continu, ce qui est particulièrement utile lorsque l'enfournement est réalisé sous le niveau du bain de verre.

La mise en œuvre d'un silo tampon équipé de préférence d'une balance en sortie permet de réguler précisément la masse introduite dans l'enfourneuse.

Selon un mode de réalisation particulier, ladite composition de matières premières est enfournée selon un débit massique supérieur ou égal à 5 tonnes par jour.

Selon un mode de réalisation particulier, ladite composition de matières premières est enfournée selon un débit massique supérieur ou égal à 7 tonnes par jour, préférentiellement supérieur ou égal à 9 tonnes par jour, préférentiellement supérieur ou égal à 10 tonnes par jour.

Le rendement total du four augmente avec son débit massique d'enfournement, d'où l'intérêt d'augmenter ce dernier. L'utilisation d'une composition de matières premières selon l'une des revendications 7 et 8 permet d'atteindre plus facilement de telles valeurs de débit massique d'enfournement.

Selon un mode de réalisation particulier, la masse volumique apparente du mélange granulaire est mesurée périodiquement, de façon manuelle et/ou automatique.

Selon un mode de réalisation particulier, la masse volumique apparente du mélange granulaire est ajustée manuellement et/ou automatiquement, en fonction des débits souhaités d'enfournement.

Selon un mode de réalisation particulier, ladite composition de matières premières est enfournée en-dessous du niveau du bain de verre, et préférentiellement en que ledit procédé de fusion met en œuvre une chambre de fusion équipée de brûleurs immergés.

Dans la description, les expressions « verre liquide » et « bain de verre » désignent le produit de la fusion de ces matières vitrifiables introduites dans le four verrier. Au sens de l'invention, on comprend par « brûleurs immergés », des brûleurs configurés de manière à ce que les flammes qu'ils génèrent et/ou les gaz de combustion produits se développent au sein même du bain de verre. Généralement, ils sont disposés de manière à affleurer au niveau de la sole de façon à ce que la flamme se développe au sein même de la masse des matières vitrifiables en cours de liquéfaction (fusion). On peut ainsi les faire traverser ses parois latérales, la sole (paroi inférieure) et/ou les suspendre par le dessus, en les accrochant à la voûte ou à toute superstructure appropriée. Ces brûleurs peuvent être tels que leurs conduits d'amenée des gaz affleurent la paroi qu'ils traversent. Il peut être préférable que ces conduits « entrent » au moins en partie dans la masse des matières vitrifiables, de manière à éviter que les flammes ne soient à trop grande proximité des parois et n'entraînent des usures prématurées des matériaux réfractaires. On peut aussi choisir de n'injecter que les gaz de combustion, les combustions étant réalisées hors de la chambre de fusion à proprement dite.

La mise en œuvre d'un four à brûleurs immergés permet d'augmenter considérablement le rendement de production par rapport à des fusions « classiques ». En effet, la fusion par brûleurs immergés crée un brassage convectif au sein des matières vitrifiables en cours de liquéfaction. Ce mélange entre matières non encore liquéfiées et celles qui sont déjà en fusion est très efficace et permet d'obtenir une fusion, à matières vitrifiables de composition chimique identique, à température moins élevée et/ou beaucoup plus rapide qu'avec des moyens de chauffage traditionnels. On retrouve ainsi les caractéristiques très favorables d'une fusion « agitée », sans avoir recours à des moyens d'agitation mécaniques peu fiables et/ou susceptibles d'usure rapide. Ceci est très intéressant de par la réduction du coût énergétique du four, mais également de par le choix des matériaux du type réfractaire entrant dans la fabrication des installations : moins chauds, ils se corrodent moins vite.

Selon un mode de réalisation particulier, ladite composition de matières premières est enfournée au-dessus du niveau du bain de verre, et préférentiellement en que ledit procédé de fusion met en œuvre une chambre de fusion équipée de brûleurs à flamme agencés au-dessus du niveau du bain de verre.

L'enfournement de ladite composition de matières premières au-dessus du niveau du bain de verre a pour avantage de permettre de brûler les organiques présents dans ladite composition avant leur introduction dans le bain de verre, ce qui permet de mettre à profit la source d'énergie supplémentaire que ces organiques constituent tout en limitant la pollution du bain de verre.

Dans ce contexte, la réduction de l'épaisseur du tapis de composition (batch en langue anglaise) enfourné à la surface du bain de verre permet de faciliter sa fusion tout en limitant les risques d'envol de particules par la (les) cheminée(s). Une composition selon l'invention est donc particulièrement adaptée puisqu'étant de volume et donc d'épaisseur réduite, pour une masse équivalente.

L'invention se rapporte également à un procédé de fabrication de calcin, de laine de verre et/ou de roche, de fils de verre textile, de verre plat et/ou de verre creux, comprenant un tel procédé de fusion.

Comme discuté dans le présent texte, la mise en œuvre d'un tel procédé de fusion permet d'atteindre des rendements de fabrication particulièrement avantageux.

L'invention se rapporte également au calcin, laine de verre et/ou de roche, fils de verre textile, verre plat et/ou verre creux obtenu selon un tel procédé de fabrication.

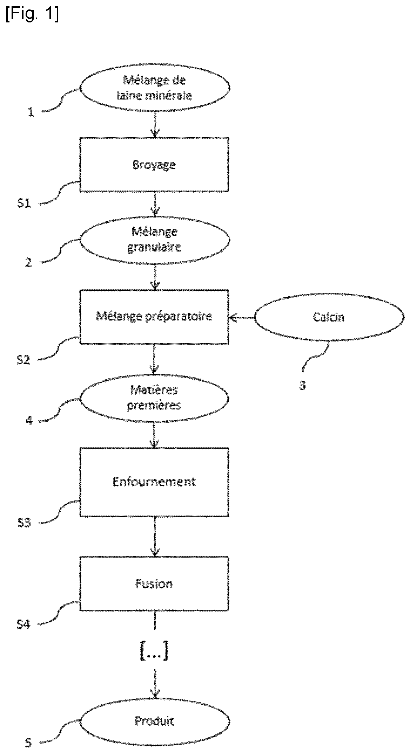

D'autres caractéristiques et avantages de l'invention apparaîtront à la lecture de la description suivante de modes de réalisation particuliers, donnés à titre de simples exemples illustratifs et non limitatifs, et de la Figure 1 [Fig. 1] annexée qui est un diagramme de flux illustrant un procédé de fabrication de calcin, de laine de verre et/ou de roche, de fils de verre textile, de verre plat et/ou de verre creux, selon un mode de réalisation particulier de l'invention.

Dans l'ensemble de la description, y inclus la figure 1, les numéros de référence qui sont identiques représentent des éléments similaires ou identiques, sauf indication contraire.

Il est de plus entendu que la présente invention n'est nullement limitée par les modes de réalisation particuliers décrits et/ou représentés, et que d'autres modes de réalisation peuvent parfaitement être mis en œuvre.

La Figure 1 est un diagramme de flux illustrant un procédé de fabrication d'un produit (5) verrier, selon un mode de réalisation particulier de l'invention. De manière classique, des matières premières (4) obtenues au moins en partie à partir d'un mélange de laine minérale (1) sont enfournées (étape S3) dans un four verrier pour être fondues (étape S4) et par la suite transformées en un produit (5) verrier.

Selon des procédés connus, le mélange fondu peut alternativement être refroidi et fragmenté pour l'obtention de calcin, fibré pour l'obtention de laine de verre ou de laine de roche, filé en fils de verre textile et/ou déversé sur un bain d'étain (float en langue anglaise) pour l'obtention de verre plat, chacune de ces applications industrielles étant désignée par l'expression « produit (5) verrier » dans l'ensemble de la description.

Selon un mode réalisation particulier de l'invention, un tel procédé de fabrication comprend la fusion d'une composition de matières premières (4) obtenue au moins en partie à partir d'un mélange granulaire un mélange granulaire (2) dont la masse volumique apparente est supérieure ou égale à 30 kg/m3.

Selon un protocole opératoire aisément reproductible de mesure de la masse volumique apparente du mélange granulaire (2), ce dernier est d'abord versé dans un récipient, par exemple un seau, de masse et de volume connu. Le récipient doit faire au moins 20 litres pour avoir une précision suffisante et respecter un rapport d'aspect permettant de limiter le tassement du mélange, en vérifiant la formule :

[Math. 1]

$$L_{max} \leq 2\sqrt[3]{V}$$

Dans laquelle $L_{max}$ est l'étendue maximale du récipient dans une direction donnée, par analogie avec le diamètre de Féret d'une particule, et V est le volume dudit récipient.

Il importe de plus de veiller à verser le mélange doucement, sans aucun mouvement du seau ni compression mécanique du mélange, afin de limiter au maximum le tassement du mélange. Le seau rempli est ensuite pesé afin de déterminer la masse du mélange versé. La masse volumique apparente est le rapport entre la masse de mélange mesurée et le volume du seau.

Il est à noter qu'une telle méthode de caractérisation de la masse volumique apparente est significativement plus précise et rigoureuse que toute méthode alternative se contentant d'estimer la taille d'un agglomérat de fibres, également appelé « flocon ». En effet, tout mélange de laine minérale (1) peut être vu comme un agglomérat de fibres minérales, de volume extensible ou compressible, qui peut lui-même être divisé en une pluralité d'agglomérats de fibres de plus petite taille et/ou de densité moindre. A défaut d'informations complémentaires, la taille d'un agglomérat de fibres minérales n'est donc pas une donnée exploitable pour caractériser un produit et/ou comparer deux produits entre eux.

Afin d'estimer plus précisément la valeur du débit massique d'enfournement en fonction des variations de différents paramètres opérationnels d'un four et de la densité apparente de la composition enfournée, les inventeurs ont réalisé une campagne d'essais de convoyage de deux lots de déchets de laine de verre présentant respectivement des masses volumiques apparentes de 20 kg/m3 et 110 kg/m3.

Deux types d'essais ont été mis en œuvre :

- des essais « à froid », pour lesquels une vis d'enfournement est alimentée pendant un laps de temps donné en déchets de laine de verre qui sont par la suite collectés à la sortie de l'enfourneuse et pesés, afin d'en déduire le débit massique d'enfournement.
- des essais dits « à chaud », pour lesquels la même enfourneuse est agencée à l'entrée d'un four de fusion en marche. Une masse connue de déchets est alimentée et le temps nécessaire pour alimenter la quantité totale est enregistré pour calculer le débit massique d'enfournement.

Pour chacun des deux essais, la vis sans fin d'enfournement présente un diamètre et un pas de vis de 30 cm. Le taux de remplissage est de 100%., la trémie de chargement de la vis étant remplie afin d'assurer son alimentation constante.

En parallèle de ces deux essais industriels, les valeurs théoriques de débit massique sont calculées dans les mêmes conditions opérationnelles et sur la base de la formule suivante, qui donne une approximation du débit massique Q transporté par la vis (en kg/s) :

$$Q = r * d * V * \pi * R^2 * H,$$

où r est le taux de remplissage de la vis, d est la densité du mélange enfourné (en kg/s), V est la vitesse de rotation de la vis sans fin (en s$^{-1}$ ; 10 rpm dans des conditions standards d'enfournement), R est le rayon de la vis (en m) et H est la valeur du pas de vis (en m).

Le tableau 1 [Tableaux 1] ci-dessous présente les résultats obtenus pour quatre échantillons de laine de verre qui présentent des masses volumiques apparentes différentes. Ces quatre échantillons sont introduits dans le four via la vis sans fin, pour différentes vitesses de rotation de la vis.

Tableau 1 - Variation du débit massique d'enfournement en fonction de différents paramètres opérationnels d'un four et de la densité apparente de la composition enfournée

| Numéro d'échantillon | Densité apparente en kg/m3 | Vitesse de la vis en rpm | Débit massique en kg/heure | | | Rapport Chaud/Théorie en % |
|---|---|---|---|---|---|---|
| | | | Théorie | Essais à froid | Essais à chaud | |
| 1 | 20 | 10 | 232 | 216 | 150 | 65 |
| 2 | 110 | 2 | 248 | 254 | 147 | 59 |
| 3 | 110 | 3 | 372 | 360 | 283 | 76 |
| 4 | 110 | 4 | 495 | 492 | 383 | 77 |

En comparant les valeurs théoriques de débit massique et les résultats obtenus avec les essais à froid, on observe un écart négligeable. La théorie du transport de la vis (valeurs théoriques) permet donc de donner une estimation relativement précise des résultats obtenus à froid.

En revanche, en comparant les valeurs théoriques de débit massique et les résultats obtenus avec les essais réalisés cette fois à chaud, on observe de manière surprenante une réduction significative du débit massique, comprise entre 20% et 40% de la valeur théorique. Plusieurs hypothèses permettraient éventuellement de justifier un tel écart de valeurs, constaté de manière empirique, dont la pression exercée par le bain de verre sur le mélange à enfourner, et/ou la remontée de gazs de combustion depuis le four, ces gaz occupant alors une partie de l'espace disponible dans la vis.

La prise en compte d'un tel écart trouve une application directe dans la réalité industrielle. Ainsi, il est communément admis que pour des raisons de rentabilité d'un four de fusion, le débit massique minimal d'enfournement de matières premières dans le four doit être de 5 tonnes par jour, soit 208 kg/h. Si un homme du métier s'en tient à la théorie ou aux résultats obtenus à froid, c'est-à-dire dans le cadre d'essais significativement plus faciles à mettre en œuvre que les essais à chaud, il arrivera à la conclusion que dans des conditions standards d'enfournement, l'utilisation de déchets de laine de verre présentant une masse volumique apparente de 20 kg/m3 suffit à l'obtention d'un débit d'enfournement de 232 kg/h, soit un débit satisfaisant.

Or, il n'en est rien. Les essais réalisés à chaud sur l'échantillon numéro 1 (voir Tableau 1) permettent de constater que le débit massique réellement obtenu serait de 150 kg/m3, soit un débit bien en-dessous du critère fixé.

Pour des conditions opérationnelles équivalentes, et en prenant en compte une déviation maximale de 40%, la masse volumique apparente nécessaire pour l'obtention d'un débit de 208,8 kg/m3, soit une valeur quasiment égale au seuil minimum fixé, est en réalité de 30 kg/m3.

L'obtention de cette valeur seuil de masse volumique apparente n'a rien d'évident, puisqu'elle est le fruit d'une série d'essais complexes (à chaud) mis en œuvre par les inventeurs.

Dans l'optique d'accroître la masse volumique apparente du mélange granulaire, les inventeurs ont mis en œuvre une broyeuse industrielle de fabrication standard, et ont réalisé une campagne d'essais au cours de laquelle trois lots de déchets de laine de verre ont été broyés avant que la masse volumique apparente des mélanges granulaires obtenus soit mesurée pour chacun de ces lots. L'objectif de cette campagne était en particulier d'évaluer l'influence des différents paramètres de la broyeuse et du taux d'humidification sur la masse volumique apparente du mélange de laine minérale broyée.

Un premier lot est composé uniquement de plaques de laine de verre standards.

Un deuxième lot correspond à ce premier lot auquel sont ajoutés 8,8 kg de déchets de laine de verre humidifiés.

Un troisième lot correspond à ce deuxième lot auquel sont ajoutés 6,4 kg de déchets de laine de verre humidifiés.

Sur la base de ces trois lots, cinq (5) essais sont mis en œuvre. Les essais numéro 1 à 3 étant réalisés avec le premier lot, en faisant varier les réglages de la broyeuse. L'essai numéro 4 est mis en œuvre avec le deuxième lot, et l'essai numéro 5 est mis en œuvre avec le troisième lot.

Le tableau 2 [Tableaux 2] ci-dessous présente les résultats obtenus pour chacun de ces essais. A défaut de précision supplémentaire, tous les paramètres non spécifiés dans le présent tableau restent identiques entre chacun de ces essais.

Tableau 2 - Variation de la masse volumique apparente de déchets de laine de verre broyés en fonction des paramètres opérationnelles de la broyeuse et du taux d'humidification du mélange broyé.

| Numéro d'essai | Taille de maille en mm | Vitesse en rpm | Capacité en kg/h | Masse volumique apparente en kg/m3 |
|---|---|---|---|---|
| 1 | 10 | 150 | 288 | 110 |
| 2 | 15 | 150 | 414 | 64 |
| 3 | 15 | 210 | 454 | 68 |
| 4 | 10 | 210 | 554 | 142 |
| 5 | 10 | 210 | 776 | 223 |

En comparant les résultats des essais 1 et 2, on observe que la réduction de la taille de maille de la grille du broyeur, de 15 mm à 10 mm, permet d'accroître la densité apparente du mélange granulaire obtenu de 72%, ainsi que la capacité de la broyeuse de 9,6%.

En comparant les résultats des essais 2 et 3, on observe que l'augmentation de la vitesse de rotation du tambour de 150 à 210 rotations par minute (rpm) permet d'accroître la densité apparente du mélange granulaire obtenu de 6,5%.

En comparant les résultats des essais 1 et 4, on observe que l'ajout de déchets humidifiés dans le mélange de laine de verre broyé permet d'accroître la densité apparente du mélange granulaire obtenu et la capacité de la broyeuse. Ceci est confirmé par la comparaison des essais 4 et 5, pour laquelle on observe que l'augmentation de la proportion de déchets humides permet d'accroître plus encore la densité apparente du mélange broyé et la capacité de la broyeuse.

Objets

Objet 1. Procédé de préparation d'une composition de matières premières adaptée pour être enfournée dans la chambre de fusion d'une installation adaptée à l'obtention de calcin, de laine de verre et/ou de roche, de fils de verre textile, de verre plat et/ou de verre creux, ledit procédé étant caractérisé en ce qu'il comprend au moins une étape de broyage d'un mélange de laine minérale adapté pour entrer dans la composition de matières premières, de sorte que le mélange granulaire obtenu après broyage présente une masse volumique apparente supérieure ou égale à 30 kg/m3 et inférieure ou égale à 500 kg/m3.

Objet 2. Procédé de préparation selon l'objet 1, caractérisé en ce que la proportion massique dudit mélange granulaire sur la masse totale de ladite composition de matières premières est supérieure ou égale à 5%, préférentiellement supérieure ou égale à 20%, préférentiellement supérieure ou égale à 40%, préférentiellement supérieure ou égale à 60%, préférentiellement supérieure ou égale à 70%, préférentiellement supérieure ou égale à 80%, préférentiellement supérieure ou égale à 90%, préférentiellement supérieure ou égale à 95%, préférentiellement supérieure ou égale à 99%.

Objet 3. Procédé de préparation selon l'un des objets 1 et 2, caractérisé en ce qu'il comprend une étape d'ajout de calcin dans ledit mélange granulaire, la masse de calcin étant supérieure ou égale à 1% de la masse totale du mélange granulaire.

Objet 4. Procédé de préparation selon l'un des objets 1 à 3, caractérisé en ce qu'il comprend une étape préalable de détermination d'une valeur souhaitée de masse volumique apparente du mélange granulaire broyé, en fonction des caractéristiques dimensionnelles d'une enfourneuse à mettre en œuvre, et/ou d'une valeur souhaitée de débit massique d'enfournement.

Objet 5. Procédé de préparation selon l'un des objets 1 à 4, caractérisé en ce que ledit mélange de laine minérale présente un taux d'humidité supérieur à 1% de la masse totale dudit mélange.

Objet 6. Procédé de préparation selon l'un des objets 1 à 5, caractérisé en ce qu'il met en œuvre au moins une broyeuse équipée d'une grille dont la taille de maille est inférieure à 20 mm.

Objet 7. Composition de matières premières (4) adaptée pour être enfournée dans la chambre de fusion d'une installation adaptée à l'obtention de calcin, de laine de verre et/ou de roche, de fils de verre textile, de verre plat et/ou de verre creux obtenue préférentiellement via un procédé de préparation selon l'un des objets 1 à 6, caractérisée en ce qu'elle comprend un mélange granulaire (2) dont la masse volumique apparente est supérieure ou égale à 30 kg/m3 et inférieure ou égale à 500 kg/m3.

Objet 8. Composition de matières premières (4) selon l'objet 7, caractérisée en ce qu'elle comprend une masse de calcin d'au moins 1% de la masse totale du mélange granulaire.

Objet 9. Procédé de fusion d'une composition de matières premières selon l'un des objets 7 et 8, pour l'obtention de calcin, de laine de verre et/ou de roche, de fils de verre textile et/ou de verre plat/verre creux.

Objet 10. Procédé de fusion selon l'objet 9, caractérisé en ce que ladite composition de matières premières est enfournée au moyen d'une vis d'enfournement, préférentiellement alimentée par un silo tampon contenant ladite composition de matières premières.

Objet 11. Procédé de fusion selon l'un des objets 9 et 10, caractérisé en ce que ladite composition de matières premières est enfournée selon un débit massique supérieur ou égal à 5 tonnes par jour.

Objet 12. Procédé de fusion selon l'un des objets 9 à 11, caractérisé en ce que ladite composition de matières premières est enfournée en-dessous du niveau du bain de verre, et préférentiellement en que ledit procédé de fusion met en œuvre une chambre de fusion équipée de brûleurs immergés.

Objet 13. Procédé de fusion selon l'un des objets 9 à 11, caractérisé en ce que ladite composition de matières premières est enfournée au-dessus du niveau du bain de verre, et préférentiellement en que ledit procédé de fusion met en œuvre une chambre de fusion équipée de brûleurs à flamme agencés au-dessus du niveau du bain de verre.

Objet 14. Procédé de fabrication de calcin, de laine de verre et/ou de roche, de fils de verre textile, de verre plat et/ou de verre creux, comprenant un procédé de fusion selon l'un des objets 9 à 13.

Objet 15. Calcin, laine de verre et/ou de roche, fils de verre textile, verre plat et/ou verre creux obtenu selon un procédé de fabrication selon l'objet 14.

**Revendications**

1. Procédé de préparation d'une composition de matières premières adaptée pour être enfournée dans la chambre de fusion d'une installation adaptée à l'obtention de calcin, de laine de verre et/ou de roche, de fils de verre textile, de verre plat et/ou de verre creux, ledit procédé étant **caractérisé en ce qu'**il comprend au moins une étape de broyage d'un mélange de laine minérale adapté pour entrer dans la composition de matières premières, de sorte que le mélange granulaire obtenu après broyage présente une masse volumique apparente supérieure ou égale à 30 kg/m3 et inférieure ou égale à 500 kg/m3.

2. Procédé de préparation selon la revendication 1, **caractérisé en ce que** la proportion massique dudit mélange granulaire sur la masse totale de ladite composition de matières premières est supérieure ou égale à 5%, préférentiellement supérieure ou égale à 20%, préférentiellement supérieure ou égale à 40%, préférentiellement supérieure ou égale à 60%, préférentiellement supérieure ou égale à 70%, préférentiellement supérieure ou égale à 80%, préférentiellement supérieure ou égale à 90%, préférentiellement supérieure ou égale à 95%, préférentiellement supérieure ou égale à 99%.

3. Procédé de préparation selon l'une des revendications 1 et 2, **caractérisé en ce qu'**il comprend une étape d'ajout de calcin dans ledit mélange granulaire, la masse de calcin étant supérieure ou égale à 1% de la masse totale du mélange granulaire.

4. Procédé de préparation selon l'une des revendications 1 à 3, **caractérisé en ce qu'**il comprend une étape préalable de détermination d'une valeur souhaitée de masse volumique apparente du mélange granulaire broyé, en fonction des caractéristiques dimensionnelles d'une enfourneuse à mettre en œuvre, et/ou d'une valeur souhaitée de débit massique d'enfournement.

5. Procédé de préparation selon l'une des revendications 1 à 4, **caractérisé en ce que** ledit mélange de laine minérale présente un taux d'humidité supérieur à 1% de la masse totale dudit mélange.

6. Procédé de préparation selon l'une des revendications 1 à 5, **caractérisé en ce qu'**il met en œuvre au moins une broyeuse équipée d'une grille dont la taille de maille est inférieure à 20 mm.

7. Composition de matières premières (4) adaptée pour être enfournée dans la chambre de fusion d'une installation adaptée à l'obtention de calcin, de laine de verre et/ou de roche, de fils de verre textile, de verre plat et/ou de verre creux obtenue préférentiellement via un procédé de préparation selon l'une des revendications 1 à 6, **caractérisée en ce qu'**elle comprend un mélange granulaire (2) dont la masse volumique apparente est supérieure ou égale à 30 kg/m3 et inférieure ou égale à 500 kg/m3.

8. Composition de matières premières (4) selon la revendication 7, **caractérisée en ce qu'**elle comprend une masse de calcin d'au moins 1% de la masse totale du mélange granulaire.

9. Procédé de fusion d'une composition de matières premières selon l'une des revendications 7 et 8, pour l'obtention de calcin, de laine de verre et/ou de roche, de fils de verre textile et/ou de verre plat/verre creux.

10. Procédé de fusion selon la revendication 9, **caractérisé en ce que** ladite composition de matières premières est enfournée au moyen d'une vis d'enfournement, préférentiellement alimentée par un silo tampon contenant ladite composition de matières premières.

11. Procédé de fusion selon l'une des revendications 9 et 10, **caractérisé en ce que** ladite composition de matières premières est enfournée selon un débit massique supérieur ou égal à 5 tonnes par jour.

**EP 4 567 012 A2**

**12.** Procédé de fusion selon l'une des revendications 9 à 11, **caractérisé en ce que** ladite composition de matières premières est enfournée en-dessous du niveau du bain de verre, et préférentiellement en que ledit procédé de fusion met en œuvre une chambre de fusion équipée de brûleurs immergés.

**13.** Procédé de fusion selon l'une des revendications 9 à 11, **caractérisé en ce que** ladite composition de matières premières est enfournée au-dessus du niveau du bain de verre, et préférentiellement en que ledit procédé de fusion met en œuvre une chambre de fusion équipée de brûleurs à flamme agencés au-dessus du niveau du bain de verre.

**14.** Procédé de fabrication de calcin, de laine de verre et/ou de roche, de fils de verre textile, de verre plat et/ou de verre creux, comprenant un procédé de fusion selon l'une des revendications 9 à 13.

**15.** Calcin, laine de verre et/ou de roche, fils de verre textile, verre plat et/ou verre creux obtenu selon un procédé de fabrication selon la revendication 14.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1771391 B1